(19) Europäisches Patentamt
European Patent Office
Office européen des brevets

(11) **EP 3 345 032 B1**

(12) **EUROPÄISCHE PATENTSCHRIFT**

(45) Veröffentlichungstag und Bekanntmachung des Hinweises auf die Patenterteilung:
**12.06.2019   Patentblatt 2019/24**

(21) Anmeldenummer: **16809812.7**

(22) Anmeldetag: **13.12.2016**

(51) Int Cl.:
*G02B 21/00* (2006.01)      *G01B 11/06* (2006.01)

(86) Internationale Anmeldenummer:
**PCT/EP2016/080771**

(87) Internationale Veröffentlichungsnummer:
**WO 2017/148555 (08.09.2017 Gazette 2017/36)**

(54) **VERFAHREN ZUR BESTIMMUNG EINER HÖHENLAGE EINES OBJEKTS**

METHOD FOR DETERMINING A HEIGHT POSITION OF AN OBJECT

PROCÉDÉ DE DÉTERMINATION D'UNE POSITION EN HAUTEUR D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2016   DE 102016103736**

(43) Veröffentlichungstag der Anmeldung:
**11.07.2018   Patentblatt 2018/28**

(73) Patentinhaber: **Carl Zeiss Microscopy GmbH 07745 Jena (DE)**

(72) Erfinder:
 • **LANGHOLZ, Nils**
  **99510 Apolda (DE)**
 • **DRESCHER, Viktor**
  **99444 Blankenhain (DE)**

(74) Vertreter: **Patentanwälte Geyer, Fehners & Partner mbB**
  **Perhamerstrasse 31**
  **80687 München (DE)**

(56) Entgegenhaltungen:
  **WO-A1-2015/144557     US-A1- 2004 149 883**
  **US-B1- 6 341 035**

**Beschreibung**

Die Erfindung betrifft ein Verfahren zur Bestimmung einer Höhenlage eines Objekts an einem lateralen ersten Ort des Objekts mittels eines Mikroskops, welches das Objekt mit einer Punktbildverwaschungsfunktion entlang einer z-Richtung, die mit der Höhenrichtung übereinstimmt, abbildet. Die Erfindung betrifft ferner ein Mikroskop zur Erzeugung einer teilkonfokalen Abbildung und einer Abbildung im Weitfeld eines Objekts, wobei das Mikroskop eine Detektoreinrichtung, eine Pinholeeinrichtung zur teilkonfokalen Abbildung sowie zur Aufnahme im Weitfeld, eine Fokussiereinrichtung, welche ausgebildet ist, eine z-Lage eines Fokus der teilkonfokalen Abbildung einzustellen, und eine Steuereinrichtung zur Steuerung der Pinholeeinrichtung, welche mit der Detektoreinrichtung verbunden ist, umfasst.

Aus dem Stand der Technik sind Verfahren bekannt, mittels welchen sich die Topographie eines Objektes mithilfe von optischen Mikroskopen bestimmen lässt. Dazu werden insbesondere konfokale Mikroskope verwendet. Bei diesen bekannten Verfahren wird der Fokus einer teilkonfokalen Abbildung in einer z-Richtung, d. h. in einer Richtung der Höhe der Topographie, verändert und an jeder z-Position eine teilkonfokale Abbildung aufgenommen. Meist wird die teilkonfokale Abbildung derart gewählt, dass das Bild einen rein konfokalen Anteil als auch einen Anteil eines Weitfelds umfasst. Für jedes dieser Bilder in z-Richtung, welche zusammenfassend auch als Stapel bezeichnet werden, wird die Intensität bestimmt und ein Intensitätsverlauf in z-Richtung berechnet. Anhand dieses berechneten Intensitätsverlaufs kann die maximale Intensität bestimmt werden, dessen z-Koordinate mit der Höhe des Objekts an dem gemessenen Punkt übereinstimmt. Um die Höhe des Objekts flächig zu bestimmen, wird das oben beschriebene Verfahren an verschiedenen Orten wiederholt.

Zur Bestimmung der maximalen Intensität ist es meist notwendig, viele Messungen entlang der z-Richtung vorzunehmen, um mit entsprechender Genauigkeit das Intensitätsmaximum und damit die Höhenlage des Objekts zu bestimmen. Daher kann das Verfahren mit einem hohen Zeitaufwand verbunden sein.

Die US 2004/0008515 A1 befasst sich mit der Verbesserung der Fluoreszenzbeleuchtung zur dreidimensional auflösenden Mikroskopie. Die Veröffentlichung Hiraoka Y. et al., Biophys. J., Vol. 57, Februar 1990, S. 325-333, schildert die Ermittlung der dreidimensionalen Abbildungseigenschaften bei einem Lichtmikroskop. McNally J. et al., SPIE, Vol. 2984, 1997, S. 52-63, vergleicht mehrere 3D-Mikroskopieverfahren mithilfe eines genau bekannten Prüfobjektes.

Aufgabe der Erfindung ist es, ein System zur schnellen Bestimmung einer Höhenlage eines Objekts bereitzustellen.

Die Aufgabe wird durch das Verfahren gemäß Anspruch 1 und durch das Mikroskop nach Anspruch 12 gelöst. Die abhängigen Ansprüche befassen sich mit bevorzugten Ausführungsformen der Erfindung.

Bei einem Verfahren zum Bestimmen einer Höhenlage eines Objekts an einem lateralen ersten Ort des Objekts mittels eines Mikrokops, welches das Objekt mit einer Punktbildverwaschungsfunktion entlang einer z-Richtung, die mit der Höheneinrichtung übereinstimmt, abbildet, werden folgende Schritte ausgeführt: Abbilden des Objekts mit dem Mikroskop im Weitfeld und Bestimmen einer Weitfeldintensität, Berechnen einer an dem ersten Ort erwarteten, maximalen Intensität durch Multiplikation der Weitfeldintensität mit einem vorgegebenen Skalierungsfaktor, teilkonfokales Abbilden des Objekts an dem ersten Ort mit dem Fokus an einer Messposition in z-Richtung, wobei für die teilkonfokale Aufnahme eine Pinholeeinrichtung mit einer Öffnung verwendet wird, die größer als eine Beugungsgrenze ist, und wobei die teilkonfokale Abbildung einen Tiefenschärfebereich festlegt und der Fokus in dem Tiefenschärfebereich liegt, sowie Bestimmen einer teilkonfokalen Intensität der teilkonfokalen Abbildung an dem ersten Ort, Berechnen einer der Punktbildverwaschungsfunktion entsprechenden Intensität an dem ersten Ort durch Bildung einer Differenz zwischen der teilkonfokalen Intensität und einem Produkt aus Weitfeldintensität mit einem vorgegebenen Verknüpfungsfaktor, Berechnen einer z-Koordinate des Fokus in z-Richtung, an der die Punktbildverwaschungsfunktion maximal ist, unter Verwendung einer vorbekannten Form der Punktbildverwaschungsfunktion, der berechneten Punktbildverwaschungsfunktion entsprechenden Intensität und der berechneten erwarteten maximalen Intensität, und Verwenden der z-Koordinate als Höhenlage des Objekts an dem ersten Ort.

Das Verfahren wird vorzugsweise dazu verwendet, eine Topographie eines lateral ausgedehnten Objekts zu bestimmen. Dazu kann die Höhenlage an mehreren ersten Orten bestimmt werden, wobei die ersten Orte lateral zueinander beabstandet sind. Die ersten Orte beziehen sich somit insbesondere auf die laterale Ausdehnung des Objekts. Die ersten Orte sind bevorzugt senkrecht zu der z-Richtung beabstandet.

Vorzugsweise wird das Verfahren scannend verwendet, wobei an jedem Scanpunkt, welcher dem ersten Ort entsprechen kann, das beanspruchte Verfahren oder Teile des Verfahrens durchgeführt werden. Aus den Höhenlagen der einzelnen ersten Orte kann die Topographie des Objekts bestimmt werden.

Das Mikroskop ist ausgebildet, das Objekt teilkonfokal abzubilden. Teilkonfokal soll in diesem Zusammenhang bedeuten, dass die Abbildung mithilfe eines Pinholes in der z-Richtung begrenzt, aber noch nicht beugungsbegrenzt, ist. Dabei bestimmt die Größe des Pinholes den Bereich des ersten Orts in z-Richtung, welcher durch die teilkonfokale Abbildung abgebildet wird. Wie dies allgemein bekannt ist, ist die Auflösung in z-Richtung umso größer, je kleiner das Pinhole ist.

Eine konfokale Abbildung soll in diesem Zusammenhang bedeuten, dass das Pinhole eine Ausdehnung hat, welche der Beugungsgrenze der Abbildung entspricht. Eine teilkonfokale Abbildung weist insbesondere Anteile einer rein konfokalen Abbildung und des Weitbilds auf. Das Pinhole für eine teilkonfokale Abbildung ist insbesondere größer als das Pinhole für eine konfokale Abbildung. Die teilkonfokale Abbildung dient insbesondere zur Erfassung eines sogenannten Komposit-Bilds.

Das Mikroskop, insbesondere dessen Optik und die Größe des Pinholes, bestimmt den Tiefenschärfenbereich in z-Richtung. Somit ist der Tiefenschärfebereich eine Eigenschaft des Mikroskops, welche vorab mit bekannten Verfahren bestimmt werden kann.

Das Objekt weist insbesondere eine Topographie auf, der Höhenänderung im Nano- bis Millimeterbereich liegt. Das Objekt kann jede Probe sein, welche optisch abgebildet werden kann. Insbesondere kann das Objekt auch eine biologische Probe sein.

Die teilkonfokale Abbildung definiert den Tiefenschärfebereich. Der Tiefenschärfebereich hängt von der Größe des Pinholes ab, wobei der Tiefenschärfebereich in z-Richtung umso größer ist, je größer das Pinhole ist. Somit hat eine konfokale Abbildung einen kleineren Tiefenschärfebereich in z-Richtung als die teilkonfokale Abbildung. Ferner ist der Tiefenschärfebereich einer teilkonfokalen Abbildung kleiner als der Tiefenschärfenberich einer Weitfeldabbildung. Wenn bei einer konfokalen Abbildung das Pinhole weiter verkleinert wird, ändert sich der Tiefenschärfebereich nicht, sondern es wird lediglich die Intensität der konfokalen Abbildung reduziert.

Eine Abbildung im Weitfeld soll insbesondere eine Abbildung des Objekts sein, welche keine oder eine geringe Ortsauflösung in z-Richtung hat. Dies kann dadurch geschehen, dass in einem Abbildungsstrahlengang, welcher den Strahlengang des von dem ersten Ort emittierten oder reflektierten Lichts zu einer Detektoreinrichtung des Mikroskops darstellt, kein Pinhole oder ein Pinhole mit einem großem Durchmesser vorgesehen ist. Nach Durchführung der Abbildung im Weitfeld wird dessen Intensität bestimmt, welche der Weitfeldintensität entspricht.

Die Abbildung im Weitfeld kann an dem ersten Ort erfolgen oder an jedem anderen Ort des Objekts und dient vorzugsweise dazu, die optischen Eigenschaften, wie beispielsweise die Reflektivität der Probe zu erfassen. Bevorzugt wird die Weitfeldintensität lediglich einmal bestimmt, so dass, wenn das Verfahren wiederholt wird, die Weitfeldintensität einer vorangegangenen Messung verwendet wird. Die Weitfeldintensität lediglich einmal zu bestimmen, funktioniert insbesondere dann, wenn ein Objekt vorliegt, dass dessen optische Eigenschaften, insbesondere die Reflektivität, über die Ausdehnung des Objekts als konstant oder annähernd konstant sind, oder sich weniger als 10%, 20% oder 50% ändert. Somit wird bei einer Wiederholung des hier dargestellten Verfahrens bevorzugt nur eine Abbildung im Weitfeld des ersten Orts durchgeführt.

Als weiterer Schritt des Verfahrens wird die an dem ersten Ort erwartete maximale Intensität berechnet, welche der maximalen Intensität entspricht, die man bei einer teilkonfokalen Abbildung oder einer konfokalen Abbildung erhielt. Diese Berechnung beruht auf der Erkenntnis der Erfinder, dass die maximale Intensität einer konfokalen oder teilkonfokalen Abbildung proportional zu der Weitfeldintensität ist. Dieses Verhältnis entspricht dem Skalierungsfaktor, welcher vorzugsweise vorab bei dem Mikroskop, und insbesondere an dem Objekt, bestimmt wird. Die Berechnung der erwarteten maximalen Intensität an dem ersten Ort kann nur einmal durchgeführt werden, wenn die Bestimmung der Weitfeldintensität ebenfalls nur einmal durchgeführt wird. Die Bestimmung der erwarteten, maximalen Intensität muss daher bei einer Wiederholung des Verfahrens nicht erneut durchgeführt werden.

Das teilkonfokale Abbilden des Objekts an dem ersten Ort wird bei einer Wiederholung des Verfahrens insbesondere an jedem der ersten Orte durchgeführt. Der Fokus dieser Abbildung wird an einer z-Messposition vorgesehen, welche in dem Tiefenschärfebereich der teilkonfokalen Abbildung des Mikroskops liegt. Insbesondere liegt die z-Messpostion in einem Tiefenschärfebereich, der durch eine konfokale Abbildung festgelegt ist.Die Wahl der z-Messposition erfolgt vorzugsweise zufällig, oder es wird für die teilkonfokale Abbildung an jedem der ersten Orte die gleiche z-Messposition verwendet. Die Festlegung der z-Messposition derart, dass sie im Tiefenschärfenbereich der teilkonfokalen Abbildung liegt, kann durch ein Trial-and-Error-Verfahren oder manuell erfolgen. Insbesondere können zur Festlegung des Tiefenschärfebereichs der teilkonfokalen Abbildung andere bekannte Parameter des Objekts oder des Mikroskops herangezogen werden. Die aus der teilkonfokalen Abbildung bestimmte teilkonfokale Intensität kann vorzugsweise verwendet werden, um zu eruieren, ob die z-Messposition im Tiefenschärfebereich liegt. Ist dies nicht der Fall, kann dieser Verfahrensschritt wiederholt werden, bis feststeht, dass die z-Messposition im Tiefenschärfenbereich der teilkonfokalen Abbildung liegt.

Die teilkonfokale Abbildung erfolgt dadurch, dass in dem Abbildungsstrahlengang ein Pinhole vorgesehen ist. Die teilkonfokale Abbildung weist somit im Unterschied zur Abbildung im Weitfeld eine bessere Auflösung in z-Richtung auf. Dadurch dass sich für das Mikroskop die Punktbildverwaschungsfunktion bestimmen lässt, ist insbesondere deren genauer Verlauf bekannt, beispielsweise die Abweichung der Punktbildverwaschungsfunktion von einer Gauß-Kurve sowie deren Standardbreite. Eine rein konfokale Abbildung bildet das Objekt mit der Punktbildverwaschungsfunktion ab.

Die maximale Intensität der Punktbildverwaschungsfunktion wird insbesondere als die der Punktbildverwaschungsfunktion entsprechende Intensität bezeichnet. Die z-Messposition in z-Richtung, welche mit der maximalen Intensität der Punktbildverwaschungsfunktion übereinstimmt, lässt sich aufgrund der Annahme berechnen, dass die Intensität einer teilkonfokalen Abbildung an dem ersten Ort gleich der Summe aus der Intensität einer konfokalen Abbildung an dem ersten Ort und der mit einem Verknüpfungsfaktor multiplizierten Weitfeldintensität entspricht. Der Verknüpfungsfaktor wird vorzugsweise vor Durchführung des Verfahrens bestimmt, beispielsweise für das beobachtete Objekt oder allgemein für das Mikroskop. Aus diesem Zusammenhang lässt sich aus mit den gemessenen Größen, nämlich der teilkonfokalen Intensität und der Weitfeldintensität, die der Punktbildverwaschungsfunktion entsprechende Intensität an dem ersten Ort berechnen. Dieser Verfahrensschritt wird vorzugsweise bei der Topographieermittlung für jeden ersten Ort durchgeführt.

Die gesuchte z-Koordinate ist die Position des Fokus in z-Richtung, an der die Intensität der Punktbildverwaschungsfunktion maximal ist. Sie wird unter Verwendung der Information der Form der Punktbildverwaschungsfunktion und zweier Punkte, welche von der Punktbildverwaschungsfunktion bekannt sind, berechnet. Dies gelingt, da die Punktbildverwaschungsfunktion in z-Richtung mit dem Intensitätsverlauf einer konfokalen Abbildung übereinstimmt. Die Berechnung der Position an dem die Punktbildverwaschungsfunktion maximal ist, kann beispielsweise durch Fitten der Punktbildverwaschungsfunktion an die zwei bekannten Punkte durchgeführt werden.

Diese zwei bekannten Punkte entsprechen der der Punktbildverwaschungsfunktion entsprechenden Intensität der teilkonfokalen Abbildung sowie der erwarteten, maximalen Intensität, welche zuvor, wie oben beschrieben, bestimmt wurde. Die z-Koordinate des Fokus, an der der Intensitätsverlauf der Punktbildverwaschungsfunktion maximal ist, entspricht der Höhenlage des ersten Orts des Objekts.

Bei der Bestimmung der Position, für den die Punktbildverwaschungsfunktion maximal ist, kann eine Doppeldeutigkeit auftreten. Diese kann wie im Folgenden beschrieben aufgelöst werden. Optional kann dieses Problem dadurch gelöst werden, dass die bestimmte z-Koordinate des Fokus mit zuvor bestimmten z-Koordinaten verglichen werden, beispielweise indem diejenige der zwei bestimmten z-Koordinaten als wahre Position verwendet wird, die am nächsten an der vorangegangenen Messung liegt. Darüber hinaus ist es möglich, dass weitere von dem Objekt bekannte Informationen zur Auflösung der Uneindeutigkeit herangezogen werden.

Bevorzugt wird zur Bestimmung der Höhenlage des Objekts an dem ersten Ort nur eine einzige teilkonfokale Abbildung durchgeführt. Da bei bekannten Verfahren zur optischen Bestimmung der Topographie eines Objekts z-Stapel mit meist zehn oder mehr teilkonfokalen Abbildungen mit zueinander in z-Richtung beabstandeten Foki augenommen werden müssen und diese Messungen sequenziell vorgenommen werden, reduziert die Erfindung die Verfahrensdauer zur Bestimmung der Höhenlage eines Punktes des Objekts auf bis zu 10 % im Vergleich zu bekannten Verfahren. Insbesondere ist es mit dem Verfahren möglich, für jeden ersten Ort nur eine einzige teilkonfokale Abbildung aufzunehmen, so dass mit bekannten konfokalen Abbildungsverfahren nicht nur ein zweidimensionales Bild, sondern sogleich ein dreidimensionales Bild des Objekts erzeugt werden kann.

Es ist bevorzugt, dass für die teilkonfokale Aufnahme eine Pinholeeinrichtung mit einer Öffnung verwendet wird, welche größer als eine Beugungsgrenze ist, so dass die Intensität der teilkonfokalen Aufnahme Anteile einer Weitfeldabbildung aufweist.

Vorteil dieser Ausführungsform ist, dass der Intensitätsverlauf der teilkonfokalen Abbildung in Abhängigkeit von der z-Messposition einen größeren Tiefenschärfebereich aufweist verglichen mit einer rein konfokalen Abbildung, also eine Abbildung, bei der das Pinhole eine Öffnung, welche der Beugungsgrenze entspricht, aufweist. Somit ist der Tiefenschärfebereich bei dieser Ausführungsform vergrößert und kann leichter eingestellt werden. Darüber hinaus können größere Höhenunterschiede bestimmt werden.

Es ist bevorzugt, dass der Skalierungsfaktor durch folgende Schritte bestimmt wird: Erzeugen eines z-Stapels durch wiederholtes teilkonfokales Abbilden eines lateralen ersten Kalibrationsorts eines ersten Kalibrationsobjekts oder des Objekts mit unterschiedlichen, in z-Richtung verschobenen Foki und Bestimmen der teilkonfokalen Intensitäten für jede der teilkonfokalen Abbildung; Berechnen eines Intensitätsverlaufs in z-Richtung an dem ersten Kalibrationsort und Bestimmen einer maximalen Kalibrationsintensität des Intensitätsverlaufs an dem ersten Kalibrationsort; Abbilden des ersten Kalibrationsorts mit dem Mikroskop im Weitfeld und Bestimmen einer ersten Kalibrationsweitfeldintensität an dem ersten Kalibrationsort; und Berechnen des Skalierungsfaktors als Verhältnis zwischen der maximalen Kalibrationsintensität und der ersten Kalibrationsweitfeldintensität.

Der Skalierungsfaktor kann an einem von dem Objekt unterschiedlichen ersten Kalibrationsobjekt oder an dem Objekt selbst bestimmt werden. Das erste Kalibrationsobjekt weist vorzugsweise ähnliche optische Eigenschaften, speziell hinsichtlich der Reflektion und der Streuung von Licht, wie das zu messende Objekt auf. Das Objekt und das erste Kalibrationsobjekt weichen insbesondere hinsichtlich ihrer optischen Eigenschaften um weniger als 10%, 20% oder 50% ab. Die Verwendung eines ersten Kalibrationsobjekts hat den Vorteil, dass die Bestimmung des Skalierungsfaktors nicht jedesmal vor dem Verfahren durchgeführt werden muss. Die Ermittlung des Skalierungsfaktors an dem zu messenden Objekt selbst hat hingegen den Vorteil, dass der Skalierungsfaktor mit einer besonders hohen Genauigkeit bestimmt werden kann. Die Bestimmung des Skalierungsfaktors erfolgt insbesondere vor der Durchführung des Verfahrens, wie es oben beschrieben wurde.

Der erste Kalibrationsort kann ein beliebig ausgewählter Ort des ersten Kalibrationsobjekts oder des Objekts sein. Beispielsweise ist es möglich, dass der erste Kalibrationsort mit dem ersten Ort übereinstimmt, etwa dann, wenn die Bestimmung des Skalierungsfaktors unmittelbar vor der Durchführung des beschriebenen Verfahrens vorgenommen wird.

Zur Bestimmung des Skalierungsfaktors wird der Intensitätsverlauf der teilkonfokalen Abbildung in z-Richtung bestimmt. Dabei wird im Abbildungsstrahlengang ein Pinhole vorgesehen, dessen Öffnung eine Größe hat, wie sie später in dem beschriebenen Verfahren verwendet wird. Insbesondere wird für die teilkonfokale Abbildung ein Pinhole verwendet, das sowohl für die Bestimmung des Skalierungsfaktors als auch für die Bestimmung der Höhenlage des Objekts an dem ersten Ort eingesetzt wird.

Die mehreren teilkonfokalen Abbildungen, deren Foki in z-Richtung verschoben sind, bilden einen z-Stapel, aus dem jeweils die teilkonfokale Intensität bestimmt wird, so dass sich daraus der Intensitätsverlauf in z-Richtung bestimmen lässt. Anhand diesem Intensitätsverlauf wird die maximale Kalibrationsintensität berechnet und zu der ebenfalls erfassten Kalibrationsweitfeldintensität, welche an dem ersten Kalibrationsort bestimmt wurde, ins Verhältnis gesetzt. Insbesondere ist der Skalierungsfaktor das Verhältnis von der maximalen Kalibrationsintensität zu der ersten Kalibrationsweitfeldintensität. Die Kalibrationsweitfeldintensität wird insbesondere wie die oben bestimmte Weitfeldintensität ermittelt.

Es ist bevorzugt, dass der Verknüpfungsfaktor durch folgende Schritte bestimmt wird: Teilkonfokales Abbilden eines lateralen zweiten Kalibrationsort eines zweiten Kalibrationsobjekts oder des Objekts mit dem Fokus an einer Kalibrationsmessposition in z-Richtung, der in dem Tiefenschärfebereich liegt, und Bestimmen einer teilkonfokalen Kalibrationsintensität der teilkonfokalen Abbildung an dem zweiten Kalibrationsort; konfokales Abbilden des zweiten Kalibrationsorts mit dem Fokus an der Kalibrationsmessposition und Bestimmen einer konfokalen Kalibrationsintensität der konfokalen Abbildung an dem zweiten Kalibrationsort; Abbilden des zweiten Kalibrationsort mit dem Mikroskop im Weitfeld und Bestimmen einer zweiten Kalibrationsweitfeldintensität an dem zweiten Kalibrationsort; und Berechnen des Verknüpfungsfaktors als Verhältnis zwischen der Differenz zwischen der teilkonfokalen Kalibrationsintensität und der konfokalen Kalibrationsintensität zu der zweiten Kalibrationsweitfeldintensität.

Das zweite Kalibrationsobjekt kann mit dem ersten Kalibrationsobjekt übereinstimmen. Insbesondere ist das zweite Kalibrationsobjekt hinsichtlich seiner Reflexion und Streuung von Licht ähnlich wie das Objekt ausgebildet, beispielsweise unterschieden sich die optischen Parameter weniger als 10%, 20% oder 50%. Bevorzugt wird jedoch die Bestimmung des Verknüpfungsfaktors an dem Objekt selbst durchgeführt. Dazu wird an einem beliebig gewählten zweiten Kalibrationsort, der mit dem ersten Kalibrationsort oder dem ersten Ort übereinstimmen kann, eine teilkonfokale Abbildung erzeugt. Insbesondere ist die Größe des Pinholes in dem Abbildungsstrahlengang dieselbe wie bei dem oben beschriebenen Verfahren. Vorzugsweise ist das Pinhole identisch zu dem im Anschluss an die Berechnung des Verknüpfungsfaktors durchgeführten und oben beschriebenen Verfahren.

Die konfokale Abbildung erfolgt mit einem Pinhole, dessen Durchmesser der Beugungsgrenze der Abbildung entspricht. Das Pinhole für die teilkonfokale Abbildung ist somit größer als das Pinhole für die teilkonfokale Abbildung. Die an dem zweiten Kalibrationsort bestimmte konfokale Kalibrationsintensität der konfokalen Abbildung entspricht einer der Punktbildverwaschungsfunktion entsprechenden Kalibrationsintensität, da die Punktbildverwaschungsfunktion bei der konfokalen Abbildung erreicht wird.

Die zweite Kalibrationsweitfeldintensität kann mit der ersten Kalibrationsweitfeldintensität übereinstimmen, wenn diese an demselben Ort wie die erste Kalibrationsweitfeldintensität bestimmt wird. Insbesondere kann der Schritt Abbilden des zweiten Kalibrationsort mit dem Mikroskop im Weitfeld und Bestimmen einer zweiten Kalibrationsweitfeldintensität an dem zweiten Kalibrationsort dann ausbleiben, wenn der erste Kalibrationsort mit dem zweiten Kalibrationsort übereinstimmt.

Die Berechnung des Verknüpfungsfaktors erfolgt umgekehrt wie die Bestimmung der der Punktbildverwaschungsfunktion entsprechenden Intensität anhand der oben beschriebenen Beziehung zwischen Intensität der teilkonfokalen Abbildung, Intensität der konfokalen Abbildung und Weitfeldintensität.

Es ist bevorzugt, dass der erste Ort mit dem Mikroskop im Weitfeld abgebildet wird und dass eine aktuelle Weitfeldintensität an dem ersten Ort bestimmt wird.

Insbesondere wird bei einer Wiederholung des oben beschriebenen Verfahrens an jedem der ersten Orte ein Weitfeldbild aufgenommen und somit an jedem ersten Ort die Weitfeldintensität bestimmt. Dieses Vorgehen hat den Vorteil, dass, wenn das Objekt hinsichtlich optischen Eigenschaften, speziell der Reflektivität oder Streuung des Lichts, entlang der Ausdehnung des Objekts stark variiert, die jeweils passende Weitfeldintensität verwendet wird. Somit lässt sich durch die Bestimmung der Weitfeldintensität an jedem ersten Ort die Genauigkeit des Verfahrens erhöhen.

Es ist bevorzugt, dass das Verfahren ferner die folgenden Schritte aufweist: Teilkonfokales Abbilden des ersten Orts mit dem Fokus an wenigstens zwei in z-Richtung beabstandeten z-Messpositionen, die jeweils in dem Tiefenschärfebereich liegen, und Bestimmen von teilkonfokalen Intensitäten für jede teilkonfokale Abbildung an dem ersten Ort; Berechnen der der Punktbildverwaschungsfunktion entsprechenden Intensitäten an dem ersten Ort durch jeweilige Bildung einer Differenz zwischen der jeweiligen teilkonfokalen Intensität und einem Produkt aus Weitfeldintensität mit dem vorgegebenen Verknüpfungsfaktor; Berechnen der z-Koordinate des Fokus in z-Richtung an dem die Punktbildverwaschungsfunktion maximal ist, unter Verwendung der Form der Punktbildverwaschungsfunktion, der berechneten, der Punktbildverwaschungsfunktion entsprechenden Intensitäten und der berechneten, erwarteten maximalen Intensität.

In dieser bevorzugten Ausführungsform werden zwei oder mehr teilkonfokale Abbildungen des Ortes bestimmt, wobei die Foki der teilkonfokalen Abbildungen in z-Richtung beabstandet sind. Die Größe des Pinholes ist bevorzugt für jede der teilkonfokalen Abbildungen gleich. Zwei teilkonfokale Abbildungen und die entsprechende Bestimmung der teilkonfokalen Intensitäten erlauben es, dass die Bestimmung der Position, an dem die Punktbildverwaschungsfunktion maximal ist, anhand drei Punkten erfolgt, nämlich die beiden der Punktbildverwaschungsfunktion entsprechenden Intensitäten sowie der maximalen Intensität der Punktbildverwaschungsfunktion. Aufgrund dessen ist es möglich, die Uneindeutigkeit des oben beschriebenen Verfahrens zuverlässig aufzulösen.

Es ist bevorzugt, dass zur Erzeugung einer Live-Bestimmung einer Höhenlage des Objekts an einem von dem ersten unterschiedlichen, lateral zweiten Ort des Objekts der zweite Ort teilkonfokal abgebildet wird und dass zum Berechnen einer z-Koordinate des Fokus in z-Richtung an dem zweiten Ort die z-Koordinate des Fokus in z-Richtung an dem ersten Ort berücksichtigt wird.

Bei dieser Ausführungsform wird die Information der Höhenlage des Objekts an einem vorherigen Punkt dazu verwendet, die Uneindeutigkeit des oben beschriebenen Verfahrens aufzulösen. Es ist insbesondere vorgesehen, diejenige z-Koordinate als die wahre z-Koordinate zu verwenden, welche am nächsten zu der vorhergehenden Messung liegt. Der zweite Ort kann jeder beliebige Ort auf dem Objekt sein, welcher zu dem ersten Ort beabstandet ist. Insbesondere kann der zweite Ort von einem Nutzer des Mikroskops ausgewählt werden.

Da für diese Ausführungsform nur eine teilkonfokale Abbildung des zweiten Orts erfolgt, ist diese Ausführungsform besonders schnell, so dass auch Live-Bilder der Höhenlage des Objekts dem Beobachter angezeigt werden können. Dies ist insbesondere dann hilfreich, wenn der Benutzer manuell den zweiten Ort ansteuern kann. Es ist auch möglich, dass die manuell angesteuerten zweiten Orte zu einem Topographiebild des Objekts miteinander verknüpft werden.

Es ist bevorzugt, dass das Verfahren ferner die Schritte umfasst: Teilkonfokales Abbilden des ersten Orts mit wenigstens zwei unterschiedlichen Pinholes und mit dem Fokus an einer z-Messposition in z-Richtung, welche in dem Tiefenschärfebereich liegt, und Bestimmen einer weiteren teilkonfokalen Intensität für die teilkonfokale Abbildung mit dem weiteren Pinhole; und Berechnen der z-Koordinate unter Verwendung der Punktbildverwaschungsfunktion, der berechneten der Punktbildverwaschungsfunktion entsprechenden Intensität, der weiteren teilkonfokalen Intensität und der berechneten, erwarteten maximalen Intensität.

In dieser Ausführungsform, welche zusätzlich oder alternativ zu den zuvor genannten Ausführungsformen verwendet werden kann, werden zwei teilkonfokale Abbildungen an dem ersten Ort aufgenommen, wobei die teilkonfokalen Abbildungen mit jeweils unterschiedlich großen Pinholes erfolgen. Vorzugsweise wird nur für eine der teilkonfokalen Abbildungen eine der Punktbildverwaschungsfunktion entsprechende Intensität berechnet, sowie dies oben ausgeführt wurde. Die weitere teilkonfokale Intensität wird insbesondere dazu verwendet, die oben beschriebene Uneindeutigkeit aufzulösen. Die weitere teilkonfokale Intensität kann insbesondere dazu verwendet werden, die Seite der Bildpunktverwaschungsfunktion zu bestimmen, auf welcher Seite sich die der Bildpunktverwaschungsfunktion entsprechende Intensität befindet.

Vorteil dieser Ausführungsform ist, dass zur Bestimmung der Höhenlage des Objekts an dem ersten Ort der Fokus der teilkonfokalen Abbildung nicht verändert werden muss, sondern nur die Größe des Pinholes.

Es ist bevorzugt, dass als Mikroskop ein Laser-Scanning-Mikroskop verwendet wird, wobei zum teilkonfokalen Abbilden und Abbilden im Weitfeld die Größe des Pinholes durch Verstellen oder Austauschen des Pinholes geändert wird.

Das verwendete Laser-Scanning-Mikroskop weist insbesondere eine Pinholeeinrichtung auf, bei dem die Größe des Pinholes manuell oder automatisch verstellt werden kann. Insbesondere verwendet diese Ausführungsform des Verfahrens ein Laser-Scanning-Mikroskop mit nur einen Detektor, der sowohl die teilkonfokale Abbildung als auch die Abbildung im Weitfeld aufnimmt. Darüber hinaus ist es bei dieser Ausführungsform möglich, die Uneindeutigkeit der Bestimmung der Höhenlage des Objekts an dem ersten Ort durch zwei Aufnahmen mit unterschiedlich großen Pinholes zu bestimmen.

Es ist bevorzugt, dass als Mikroskop ein Laser-Scanning-Mikroskop verwendet wird, wobei zum teilkonfokalen Abbilden und Abbilden im Weitfeld zwei Detektoren hinter einem Pinhole unterschiedlicher Größe vorgesehen werden.

Diese Ausführungsform kann alternativ oder zusätzlich zu der zuvor beschriebenen Ausführungsform implementiert sein. Für die beiden Detektoren, die Teil einer Detektoreinrichtung sein können, ist jeweils ein Pinhole unterschiedlicher Größe vorgesehen. Die beiden Pinholes bilden insbesondere eine Pinholeeinrrichtung. Das größere der beiden Pinholes ist speziell zur Erzeugung einer Abbildung im Weitfeld vorgesehen, wobei das kleine Pinhole zur Erzeugung der teilkonfokalen Abbildung verwendet werden kann.

Bevorzugter Vorteil dieser Ausführungsform ist, dass das Weitfeldbild und die teilkonfokale Abbildung gleichzeitig erzeugt werden können, beispielsweise indem ein Strahlteiler vorgesehen wird. Somit kann bei dieser Ausführungsform bei jeder Bestimmung der Höhenlage an dem ersten Ort die Weitfeldintensität gleichzeitig mit der teilkonfokalen Intensität bestimmt werden, so dass das Verfahren bei dieser Ausführungsform des Mikroskops besonders schnell ist.

Es ist bevorzugt, dass als Mikroskop ein Laser-Scanning-Mikroskop verwendet wird, wobei zum Abbilden im Weitfeld eine Weitfeldkamera verwendet wird.

In dieser Ausgestaltung wird das Laser-Scanning-Mikroskop mit einer Weitfeldkamera versehen, auf welche, beispielsweise mit Hilfe eines Strahlteilers, ein Anteil der Strahlung des Abbildungsstrahlengangs gelenkt wird. Die Abbildung im Weitfeld und die teilkonfokale Abbildung werden dabei vorzugsweise lateral und vertikal übereinandergelegt. In dieser Ausgestaltung ist es insbesondere möglich, die teilkonfokale Abbildung und die Abbildung im Weitfeld gleichzeitig aufzunehmen.

Es ist bevorzugt, dass als Mikroskop ein konfokales Topographie-Mikroskop verwendet wird, bei dem ein Gitter als Pinhole verwendet wird, wobei zum teilkonfokalen Abbilden eine erste Kamera mit dem Gitter und zum Abbilden im Weitfeld eine zweite Kamera verwendet wird.

Konfokale Topographie-Mikroskope dienen insbesondere zur Bestimmung der Topographie eines Objekts, wobei das Objekt in einem großen Wellenlängenbereich abgebildet wird. Konfokale Topographie-Mikroskope sind aus dem Stand der Technik bekannt. Im Unterschied dazu wird in dem Abbildungsstrahlengang gemäß dieser Ausführungsform ein Strahlteiler eingebaut, welcher die Abbildungsstrahlung auf die erste Kamera und die zweite Kamera lenkt. Mithilfe der ersten Kamera und dem davor vorgesehenen Gitter kann eine teilkonfokale Abbildung des Objekts erzeugt werden, wohingegen mit der zweiten Kamera ein Weitfeldbild des Objekts dargestellt werden. Auch hier ist es wieder von Vorteil, dass die teilkonfokale Abbildung und die Abbildung im Weitfeld gleichzeitig aufgenommen werden kann. Das Gitter kann Teil einer Pinholeeinrichtung sein, während die erste Kamera und die zweite Kamera Teil einer Detektoreinrichtung sein können.

Es ist bevorzugt, dass als Mikroskop ein konfokales Airy-Mikroskop verwendet wird, bei dem das Objekt auf eine Detektoreinrichtung abgebildet wird, die mehrere Pixel aufweist, und der eine Beugungsstruktur der teilkonfokalen Abbildung auflöst, wobei die Weitfeldintensität und die teilkonfokale Intensität aus einer Aufnahme bestimmt werden.

Airy-Mikroskope erlauben es, den ersten Ort des Objekts derart abzubilden, dass die Beugungsstruktur der Abbildung mithilfe der Pixel der Detektoreinrichtung aufgelöst werden können. Da auf dem Detektor der Beugungsverlauf der Abbildung dargestellt wird, können auf der Detektoreinrichtung gleichzeitig die teilkonfokale Intensität als auch die Intensität in Weitfeldabbildung erfasst werden. Somit ist es möglich, die teilkonfokale Abbildung und die Abbildung im Weitfeld gleichzeitig aufzunehmen.

Es ist bevorzugt, dass als Mikroskop ein konfokales Airy-Mikroskop verwendet wird, bei dem das Objekt auf eine Detektoreinrichtung abgebildet wird, die mehrere Pixel aufweist, und der eine Beugungsstruktur der teilkonfokalen Abbildung auflöst, wobei zum Abbilden im Weitfeld eine Weitfeldkamera verwendet wird.

In dieser Ausgestaltung wird das Airy-Mikroskop mit einer Weitfeldkamera versehen, auf welche, beispielsweise mit Hilfe eines Strahlteilers, ein Anteil der Strahlung des Abbildungsstrahlengangs gelenkt wird. Die Abbildung im Weitfeld und die teilkonfokale Abbildung werden dabei vorzugsweise lateral und vertikal übereinandergelegt. In dieser Ausgestaltung ist es insbesondere möglich, die teilkonfokale Abbildung und die Abbildung im Weitfeld gleichzeitig aufzunehmen.

Die Erfindung betrifft ferner ein Mikroskop zur Erzeugung einer teilkonfokalen Abbildung und einer Abbildung im Weitfeld eines Objekts, wobei das Mikroskop eine Detektoreinrichtung zur Erfassung der Abbildung des Objekts, eine Pinholeeinrichtung zur Bereitstellung einer teilkonfokalen Abbildung sowie eine Aufnahme im Weitfeld, eine Fokussiereinrichtung, welche ausgebildet ist, einen Fokus der teilkonfokalen Abbildung einzustellen, und eine Steuereinrichtung zur Steuerung der Pinholeeinrichtung, welche mit der Detektoreinrichtung verbunden ist, aufweist. Das Mikroskop bildet das Objekt entlang einer z-Richtung, welche mit der Höhenrichtung des Objekts übereinstimmt, mit einer Punktbildverwaschungsfunktion ab. Die Steuereinrichtung ist ausgebildet, das Verfahren, wie es zuvor geschildert wurde, durchzuführen.

Das Mikroskop kann ein Laser-Scanning-Mikroskop, ein Airy-Mikroskop, oder ein konfokales Topographie-Mikroskop sein. Das Mikroskop kann eine Lichtquelle umfassen, die Weißlicht oder Licht einer bestimmten Wellenlänge bereitstellt, je nachdem, wie es für die Abbildung des Objekts notwendig ist. Die Detektoreinrichtung weist insbesondere Detektoren auf, mittels welchen einfallende Strahlung in elektrische Signale umgewandelt werden kann, wobei diese elektrischen Signale an die Steuereinrichtung weitergeleitet werden.

Die Pinholeeinrichtung weist bevorzugt ein Pinhole auf, mittels welchem das Objekt teilkonfokal auf die Detektoreinrichtung abgebildet werden kann. Das Pinhole kann in der Größe verstellbar sein, so dass mittels der Pinholeeinrichtung auch eine Abbildung im Weitfeld erzeugt werden kann. Alternativ kann das Pinhole aus dem Abbildungsstrahlengang entfernt werden, so dass auf diese Weise eine Abbildung im Weitfeld dargestellt werden kann. Bei dem Topographiemikroskop sind bevorzugt mehrere Pinholes oder Gitter vorgesehen, welche auf einer Maske angeordnet sind, die lateral durch den Abbildungsstrahlengang bewegbar ist. Dabei weisen die Pinholes unterschiedliche Durchmesser beziehungsweise die Gitter unterschiedliche Gitterkonstanten auf.

Die Fokussiereinrichtung ist ausgebildet, den Fokus der teilkonfokalen Abbildung einzustellen. Dazu kann die Fokussiereinrichtung eine Optik aufweisen, mittels welcher die Lage der Fokalebene auf dem Objekt verändert werden kann. Alternativ kann die Fokussiereinrichtung das Objekt in z-Richtung bewegen und dadurch die Lage der Fokalebene der Abbildung verändern. Letztlich kommt es nur auf eine Relativverschiebung zwischen Fokalebene und Objekt an.

Das Mikroskop kann ferner eine Positioniereinrichtung, welche ausgebildet ist, den ersten Ort gegenüber der Detektoreinrichtung lateral zu verschieben, aufweisen. Die Positioniereinrichtung kann als Scanner ausgebildet sein, mittels welchem das Objekt gegenüber der Detektoreinrichtung bewegt werden kann. Alternativ kann der Strahlengang zur Beleuchtung des Objekts derart moduliert werden, dass sich dadurch der erste Ort gegenüber der Detektoreinrichtung verändern lässt; dies ist beispielsweise bei einem Laser-Scanning-Mikroskop implementiert.

Es ist bevorzugt, dass die Detektoreinrichtung einen ersten Detektor für die teilkonfokale Abbildung und einen zweiten Detektor für die Abbildung im Weitfeld umfasst.

Die Steuereinrichtung dient insbesondere zur Steuerung der oben genannten Einrichtungen und zur Durchführung des zuvor beschriebenen Verfahrens. Insbesondere gelten die für das Verfahren angestellten Überlegungen, bevorzugte Ausführungsformen und Vorteile hinsichtlich des Mikroskops analog.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:

Fig. 1 ein Laser-Scanning-Mikroskop als erste Ausführungsform eines Mikroskops zur Ausführung eines Verfahrens zur Ermittlung einer Höhenlage eines Objekts;

Fig. 2 eine Blockdarstellung zur Illustrierung der Verfahrensschritte;

Fig. 3 ein Diagramm zur Darstellung der Kalibration des Verfahrens;

Fig. 4 ein Diagramm zur Darstellung der für das Verfahren verwendeten, bestimmten und gemessenen Intensitäten;

Fig. 5 ein Airy-Mikroskop als zweite Ausführungsform eines Mikroskops zur Ausführung des Verfahrens; und

Fig. 6 ein konfokales Topographie-Mikroskop als dritte Ausführungsform eines Mikroskops zur Ausführung des Verfahrens.

Ein Laser-Scanning-Mikroskop 10 dient zur scannenden Abbildung eines Objekts 12, wobei auf dem Laser-Scanning-Mikroskop 10 ein nachstehend beschriebenes Verfahren zur Bestimmung einer Höhenlage des Objekts 12 durchgeführt werden kann.

Das Laser-Scanning-Mikroskop 10 weist eine Lichtquelle 14, eine Detektoreinrichtung 16, eine Pinholeeinrichung 18, eine Fokussiereinrichtung 20, eine Positioniereinrichtung 22, eine Steuereinrichtung 24 und einen Strahlteiler 26 auf.

Die Lichtquelle 14 ist z. B. ein Laser, eine Light Emitting Diode (LED) oder andere monochrome Lichtquelle, welche Licht einer Wellenlänge aussendet, das in dem Objekt 12 Fluoreszenzfarbstoffe zur Emission von Fluoreszenzlicht anregt. Eine von der Lichtquelle 14 erzeugte Strahlung eines Beleuchtungsstrahlengangs 28 wird auf den Strahlteiler 26 gerichtet, welcher als dichroitischer Spiegel ausgebildet ist. Der Strahlteiler 26 reflektiert das Licht des Beleuchtungsstrahlengangs 28 auf die Positioniereinrichtung 22.

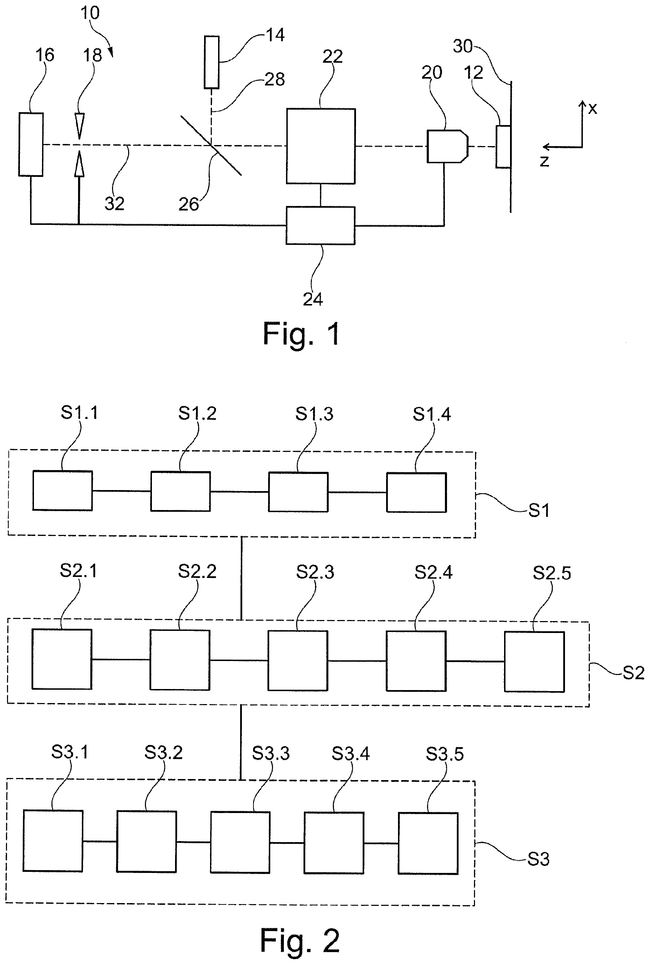

Die Positioniereinrichtung 22 weist einen Scanner, z. B. zwei beweglich aufgehängte Spiegel, auf, die in Fig. 1 nicht dargestellt sind. Mittels des Scanners kann die Positioniereinrichtung 22 den Beleuchtungsstrahlengang 28 auf verschiedene Orte des Objekts 12 richten. Die Ablenkung der Beleuchtungsstrahlung wird durch die Steuereinrichtung 24 gesteuert, welche mit der Positioniereinrichtung 22 verbunden ist. Insbesondere lenkt die Positioniereinrichtung 22 den Beleuchtungsstrahlengang 28 scannend über das Objekt 12. Alternativ wird ein das Objekt 12 tragender Probentisch verstellt.

Von der Positioniereinrichtung 22 gelangt die Beleuchtungsstrahlung 28 zu der Fokussiereinrichtung 20, welche als Objektiv ausgestaltet ist. Mittels der Fokussiereinrichtung 20 wird der Fokus des Beleuchtungsstrahlengangs 28 auf das Objekt 12 in einer z-Richtung verändert. Die z-Richtung stimmt mit der Höhenläge des Objekts 12 überein und liegt senkrecht zu einer lateralen Richtung des Objekts 12, welche durch eine x- und y-Richtung definiert ist. Die Fokussiereinrichtung 20 weist mehrere zueinander bewegliche Linsen auf, die z. B. mittels eines Elektromotors betätigt werden. Die Fokussiereinrichtung 20 ist ebenfalls mit der Steuereinrichtung 24 verbunden, so dass die Steuereinrichtung 24 den Fokus des Laser-Scanning-Mikroskops 10 verändern kann. Der Fokus stimmt mit einer z-Messposition des Laser-Scanning-Mikroskops 10 überein. Von der Fokussiereinrichtung 20 läuft der Beleuchtungsstrahlengang 28 zum Objekt 12, welches an einem Probenhalter 30 befestigt ist.

Mittels der Fokussiereinrichtung 20 kann der Fokus längs der z-Richtung variiert werden. Mittels der der Positioniereinrichtung 22 kann der Fokus des Beleuchtungsstrahlengangs 28 in einer x-Richtung und einer y-Richtung, welche beide senkrecht zu der z-Richtung sind, lateral verschoben werden.

In dem Objekt 12 sind Fluoreszenzfarbstoffe vorgesehen, welche durch die Beleuchtungsstrahlung angeregt werden und Licht in einen Abbildungsstrahlengang 32 aussenden. Sind in dem Objekt 12 keine Fluoreszenzfarbstoffe vorhanden, wird die Beleuchtungsstrahlung teilweise von dem Objekt 12 in den Abbildungsstrahlengang 32 reflektiert. Der Abbildungsstrahlengang 32 verläuft in umgekehrtem Weg zum Beleuchtungsstrahlengang 28 bis zum Strahlteiler 26. Aufgrund der Tatsache, dass das Fluoreszenzlicht eine andere Wellenlänge als Beleuchtungsstrahlung hat, kann die Strahlung im Abbildungsstrahlengang 32 den dichroitischen Strahlteiler 26 passieren und gelangt zur Pinholeeinrichtung 18, welche ein Pinhole aufweist, dessen Größe verstellt werden kann. Alternativ kann statt des dichroitischen Strahlteilers 26 ein teilreflektiver Strahlteiler vorgesehen sein, insbesondere dann wenn die Beleuchtungsstrahlung von dem Objekt 12 reflektiert wird. Insbesondere hat die Pinholeeinrichtung einen Elektromotor, der die Größe des Pinholes stufenlos oder schrittweise verändert. Die Pinholeeinrichtung 18 ist mit der Steuereinrichtung 24 verbunden, so dass die Steuereinrichtung 24 die Größe des Pinholes einstellt.

Das Pinhole liegt in einer Zwischenbildebene des Abbildungsstrahlengangs 32. Ihm nachgeordnet ist die Detektoreinrichtung 16, welche einen Detektor zur Umwandlung der Strahlung des Abbildungsstrahlengangs 32 in elektrische Signale aufweist. Die elektrischen Signale werden an die Steuereinrichtung 24 weitergeleitet, welche die daraus die Intensität der Strahlung im Abbildungsstrahlengang 32 bestimmen kann.

Das Laser-Scanning-Mikroskop 10 erzeugt eine teilkonfokale Abbildung dadurch, dass das Pinhole der Pinholeeinrichtung 18 klein eingestellt wird, beispielsweise 50-300 % größer als ein Pinhole, das das Objekt 12 beugungsbegrenzt abbildet. Zur Erzeugung einer Abbildung im Weitfeld wird das Pinhole der Pinholeeinrichtung 18 im Vergleich zur teilkonfokalen Abbildung weiter vergrößert, so dass die Abbildung hauptsächlich Anteile im Weitfeld aufweist.

Das Verfahren zum Betreiben des Laser-Scanning-Mikroskops 10 wird mithilfe des Blockschaltbilds von Fig. 2 erläutert. Das Verfahren dient dazu, eine Höhenlage des Objekts 12 an einem ersten Ort des Objekts 12 zu bestimmen. Der erste Ort kann ein beliebiger Ort des Objekts 12 sein. Insbesondere wird das Verfahren an mehreren ersten Orten wiederholt, so dass mehrere Höhenlagen des Objekts 12 bestimmt werden könne, woraus sich die Topographie des Objekts 12 ableiten lässt.

Das Verfahren umfasst drei wesentliche Schritte: Schritt S1 dient zur Kalibrierung eines Skalierungsfaktors Sk, Schritt S2 dient zur Kalibrierung eines Verknüpfungsfaktors Vk und Schritt S3 dient zur Berechnung der Höhenlage des ersten Ortes.

Zunächst wird die Kalibration des Skalierungsfaktors Sk in Schritt S1 erläutert. Die Kalibration des Skalierungsfaktors Sk kann an dem Objekt 12 oder einem Kalibrationsobjekt erfolgen, das insbesondere ähnliche Eigenschaften hinsichtlich der Reflektion und Streuung von Licht wie das Objekt 12 aufweist. In dem nachfolgenden Ausführungsbeispiel wird die Kalibration des Skalierungsfaktors Sk an dem Objekt 12 an einem Kalibrationsort, welcher eine Stelle auf dem Objekt 12 ist, diskutiert. Der Kalibrationsort ist ein Beispiel für den ersten Kalibrationsort.

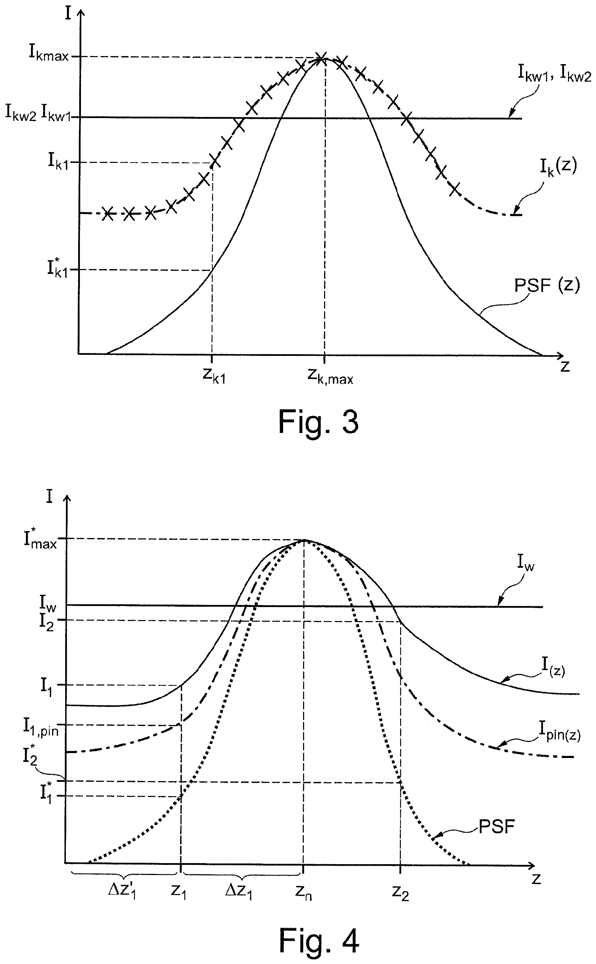

In Schritt S1.1 wird ein z-Stapel aus mehreren teilkonfokalen Abbildungen des Kalibrationsorts aufgenommen. Die Abbildungen werden im Tiefenschärfebereich der teilkonfokalen Abbildung vorgenommen, wobei die Pinholeeinrichtung 18 eine erste Größe für das Pinhole einstellt. Für jede teilkonfokale Abbildung wird die Intensität bestimmt, so dass sich in Schritt S1.2 ein Intensitätsverlauf $I_K$ (z) in Abhängigkeit von der Messposition z des Fokus ergibt. Dies ist beispielsweise in Fig. 3 dargestellt. Anhand des Intensitätsverlaufs $I_k$ (z) lässt sich eine maximale Kalibrationsintensität $I_{k,max}$ bestimmen, welche an der Position des Fokus $z_{k,max}$ vorliegt.

In Schritt S1.3 wird eine Kalibrationsweitfeldintensität $I_{KW1}$ bestimmt, indem die Pinholeeinrichtung 18 auf eine zweite Größe für das Pinhole, welche größer als die erste Größe ist, eingestellt wird. Die zweite Größe des Pinholes ist derart, dass bei der Intensität der Abbildung die Intensität der Weitfeldabbildung dominiert. Die zweite Größe ist beispielsweise 5-10-mal größer als die erste Größe. In Schritt S1.4 wird der Skalierungsfaktor Sk der, folgende Gleichung erfüllt, berechnet:

$$Sk = \frac{I_{k,max}}{I_{kW1}} \qquad\qquad (1)$$

In Teilschritt S2.1 von Schritt S2 wird eine Punktbildverwaschungsfunktion PSF(z) in z-Richtung des Laser-Scanning-Mikroskops 10 bestimmt. Dieser Schritt ist nicht notwendig, wenn die Punktbildverwaschungsfunktion PSF(z) für das Laser-Scanning-Mikroskop 10 bereits bekannt ist. In Schritt S2.2 wird an einem zweiten Kalibrationsobjekt, welches mit dem ersten Kalibrationsobjekt übereinstimmen kann, oder an dem Objekt 12 an einem zweiten Kalibrationsort, welcher mit dem ersten Kalibrationsort übereinstimmen kann, eine teilkonfokale Abbildung des zweiten Kalibrationsorts vorgenommen. Die Größe des Pinholes wird auf die erste Größe eingestellt. Der Fokus der teilkonfokalen Abbildung befindet sich an einer Kalibrationsmessposition $z_{k1}$, welche im Tiefenschärfebereich der teilkonfokalen Abbildung liegt. Im Anschluss daran wird eine teilkonfokale Kalibrationsintensität $I_{k1}$ der teilkonfokalen Abbildung des zweiten Kalibrationsorts an der Kalibrationsmessposition $z_{k1}$ bestimmt.

In Schritt S2.3 wird eine konfokale Abbildung des zweiten Kalibrationsorts vorgenommen. Der Fokus der konfokalen Abbildung befindet sich ebenfalls an der Kalibrationsmessposition $z_{k1}$. Im Anschluss daran wird eine konfokale

Kalibrationsintensität $I_{k1}^*$ der konfokalen Abbildung des zweiten Kalibrationsorts an der Kalibrationsmessposition $z_{k1}$ bestimmt. Die konfokale Abbildung wird dadurch erzeugt, dass die Größe des Pinholes der Pinholeeinrichtung 18 derart eingestellt wird, dass sie mit der Beugungsgrenze der Abbildung übereinstimmt. Die konfokale Kalibrationsintensität $I_{k1}^*$ stimmt mit der Intensität der Punktbildverwaschungsfunktion PSF(z) an der Kalibrationsmessposition $z_{k1}$ überein.

In Schritt S2.4 wird auch eine Kalibrationsweitfeldintensität $I_{KW2}$ bestimmt. Dies erfolgt analog zur Bestimmung der Kalibrationsweitfeldintensität $I_{KW1}$ in Schritt S1.3.

Der Verknüpfungsfaktor Vk wird in Schritt S2.5 aus der teilkonfokalen Kalibrationsintensität $I_{k1}$, der konfokalen Kalibrationsintensität $I_{k1}^*$ und der Kalibrationsweitfeldintensität $I_{kW2}$ gemäß folgender Gleichung bestimmt:

$$I_{k1} = I_{k1}^* + Vk \times I_{kW2} \qquad\qquad (2)$$

Im Folgenden wird erläutert, wie in Schritt S3 die Topographie bei dem kalibrierten Laser-Scanning-Mikroskop 10 bestimmt wird. Dazu wird in Schritt S3.1 der erste Ort des Laser-Scanning-Mikroskops 10 teilkonfokal abgebildet, wobei der Fokus an einer z-Messposition zi, welche im Tiefenschärfenbereich liegt, liegt. Das Pinhole wird dabei auf die erste Größe eingestellt. Im Anschluss daran wird die teilkonfokale Intensität $I_1$ bestimmt. Aus der teilkonfokalen Intensität $I_1$ wird in Schritt S3.2 mithilfe des Verknüpfungsfaktors Vk und der oben beschriebenen Gleichung (2) die der Punktbildverwaschungsfunktion PSF entsprechende teilkonfokale Intensität $I_1^*$ berechnet. Die der Punktbildverwaschungsfunktion PSF entsprechende Intensität $I_1^*$ entspricht der Intensität der Punktbildverwaschungsfunktion PSF an der z-Messposition $z_1$.

An der z-Messposition $z_1$ wird in Schritt S3.3 eine weitere teilkonfokale Abbildung vorgenommen, bei der das Pinhole gegenüber der ersten vorgenommenen teilkonfokalen Abbildung verändert ist. Dazu kann das Pinhole größenverstellbar ausgebildet sein oder die Pinholes werden ausgetauscht. Aus dieser weiteren teilkonfokalen Abbildung mit verändertem Pinhole lässt sich eine weitere teilkonfokale Intensität $I_{1,pin}$ berechnen.

Durch Vergrößerung des Pinholes der Pinholeeinrichtung 18 wird, wie oben beschrieben, in Schritt S3.4 eine Abbildung des ersten Orts im Weitfeld erzeugt und daraus die Weitfeldintensität $I_W$ bestimmt. Mithilfe von Gleichung (1) und dem Skalierungsfaktor Sk wird die maximale Intensität $I_{max}^*$ der Punktbildverwaschungsfunktion PSF berechnet.

Aus dem Verknüpfungsfaktor Vk, der erwarteten maximalen Intensität $I_{max}^*$ und der der Punktbildverwaschungsfunktion PSF entsprechenden Intensität $I_1^*$ wird in Schritt S3.5 mit Hilfe von Gleichung (2) eine z-Koordinate $z_h$ des Fokus bestimmt, welche mit der z-Koordinate der maximalen Intensität $I_{max}^*$ der Punktbildverwaschungsfunktion PSF übereinstimmt. Da nur zwei Werte zur Bestimmung verwendet werden, ist die Bestimmung nicht immer eindeutig, wie dies in Fig. 4 durch die beiden Bereiche in z-Richtung $\Delta z_1$ und $\Delta z_1'$ angedeutet wird. Mit Hilfe der weiteren teilkonfokalen Intensität $I_{1,pin}$ lässt sich nun bestimmen, wie der Verlauf der Punktbildverwaschungsfunktion PSF ist, so dass festgelegt werden kann, welcher der Abstände $\Delta z_1$ und $\Delta z_1'$ der korrekte ist, so dass die z-Messposition $z_h$ eindeutig bestimmt werden kann. Die z-Koordinate $z_h$ des Fokus entspricht der Höhenlage des Objekts 12 an dem ersten Ort. Schritte S3.1 bis S3.5 werden jedem der zu messenden Orte wiederholt, während Schritte S1 bis S2 nur einmal ausgeführt werden.

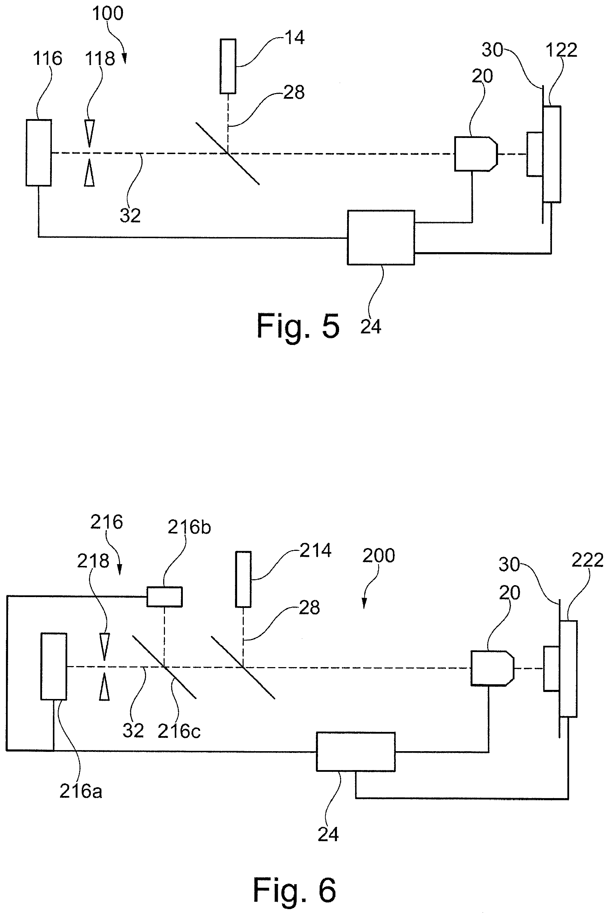

Eine zweite Ausführungsform eines Mikroskops zur Durchführung des Verfahrens ist in Fig. 5 schematisch dargestellt. Hier wird ein Airy-Mikroskop 100 verwendet, dessen schematischer Aufbau mit dem Laser-Scanning-Mikroskop 10, bis auf die folgenden dargestellten Unterschiede übereinstimmt:

Eine Positioniereinrichtung 122 des Airy-Mikroskops 100 funktioniert nicht durch Ablenkung der Strahlung des Beleuchtungsstrahlengang 28, sondern durch Bewegung des Objekts 12 gegenüber dem Beleuchtungsstrahlengang 28 mittels eines Scanners, welche die Positioniereinrichtung 122 bildet. Der Scanner bewegt den Probenhalter 30. Allerdings kann auch eine Positioniereinrichtung 122, wie bei dem Laser-Scanning-Mikroskop 10 beschrieben, verwendet werden. Die Positioniereinrichtung 122 ist auch hier mit der Steuereinrichtung 24 verbunden, so dass die Steuereinrichtung 24 die Positionierung des Objekts 12 gegenüber dem Beleuchtungsstrahlengang 28 einstellen kann.

Eine Detektoreinrichtung 116 weist mehrere Pixel auf, welche die Beugungsstruktur der teilkonfokalen Abbildung auflösen.

Die Funktionsweise des Airy-Mikroskops 100 unterscheidet sich von der Funktionsweise des Laser-Scanning-Mikroskops 10 hinsichtlich des Prinzips der Bestimmung der Höhenlage an dem ersten Ort des Objekts 12 nicht. Lediglich die Erzeugungen der teilkonfokalen Abbildung und der Abbildung im Weitfeld unterscheiden sich.

Da mit Hilfe der Detektoreinrichtung 116 die Beugungsstruktur aufgelöst werden kann, weisen die von den Pixeln gemessenen Intensitäten einer einzigen teilkonfokalen Abbildung die teilkonfokale Intensität $I_1$ sowie die Weitfeldintensität $I_W$ auf. Somit ist es möglich, mit einer einzigen teilkonfokalen Abbildung beide für die Berechnung der Höhenläge des ersten Orts benötigten Intensitäten $I_1$ und $I_W$ zu bestimmen.

Das oben beschriebene Verfahren zur Bestimmung der teilkonfokalen Intensität $I_1$ (Schritt S3.1) und der der Punktbildverwaschungsfunktion PSF entsprechenden teilkonfokalen Intensität $I_1^*$ (Schritt S3.2) wird an einer zweiten

Messposition $z_2$ wiederholt, woraus sich die teilkonfokale Intensität $I_2$ und eine der Punktbildverwaschungsfunktion PSF entsprechende teilkonfokale Intensität $I_2^*$ ergibt. Eine weitere teilkonfokale Abbildung mit geänderter Größe des Pinholes (Schritt S3.3) wird bei dem Airy-Mikroskops 100 nicht durchgeführt, sondern Schritt S3.5 erfährt folgende Abwandlung.

Man hat nun drei Punkte der Punktbildverwaschungsfunktion PSF, nämlich die der Punktbildverwaschungs-funktion PSF ensprechenden Intensitäten $I_1^*$ und $I_2^*$ sowie der maximale Wert Punktbildverwaschungsfunktion PSF, die Intensität $I_{max}^*$. Anhand dieser Werte lässt sich die PSF, dessen Form bekannt ist, fitten, sodass die z-Koordinate $z_h$ der maximalen Intensität ermittelt werden kann. Diese z-Koordinate $z_h$ entspricht die Höhenlage des Objekts 12 an dem ersten Ort, so dass der erste Ort aus den beiden teilkonfokalen Abbildungen an den Messpositionen $z_1$ und $z_2$ ermittelt werden kann.

Eine weitere Ausführungsform eines Mikroskops wird anhand von Fig. 6 erläutert. In Fig. 6 ist schematisch ein konfokales Topographie-Mikroskop 200 dargestellt, welches sich von dem Laser-Scanning-Mikroskop 10 und dem Airy-Mikroskop 100 lediglich durch die folgenden Unterschiede unterscheidet:

Das konfokale Topographie-Mikroskop 200 weist analog dem Airy-Mikroskop 100 eine Positioniereinrichtung 222 auf, welche ebenfalls als Scanner zur Bewegung des Probenhalters 30 umfasst. Auch hier ist die Ausgestaltung der Positioniereinrichtung nicht entscheidend. Eine Lichtquelle 214 kann als Laser, Light Emitting Diode (LED) oder jede andere monochrome Lichtquelle ausgestaltet sein, aber auch die Verwendung einer Weißlichtquelle ist möglich, welche Licht im kompletten sichtbaren Bereich erzeugt, so dass das Objekt 12 mit Beleuchtungsstrahlung im sichtbaren Wellenlängenbereich beleuchtet wird.

Eine Detektoreinrichtung 216 weist eine erste Kamera 216a, eine zweite Kamera 216b und einen zweiten Strahlteiler 216c auf. Der zweite Strahlteiler 216c ist als teilreflektiver Spiegel ausgebildet, welcher 50% der Strahlung im Abbildungsstrahlengang 32 auf die erste Kamera 216a und 50% der Strahlung im Abbildungsstrahlengang 32 auf die zweite Kamera 216b lenkt. Eine Pinholeeinrichtung 218 ist als Maske mit mehreren Gittern unterschiedlichen Gitterabstands ausgebildet, welche lateral durch den Abbildungsstrahlengang 32 bewegbar ist.

Mithilfe des konfokalen Topographie-Mikroskops 200 kann aufgrund des zweiten Strahlteilers 216c gleichzeitig ein Bild im Weitfeld mithilfe der zweiten Kamera 216b, vor der kein Pinhole angeordnet ist, und eine teilkonfokale Abbildung mithilfe der ersten Kamera 216a erzeugt werden. Die Funktionsweise stimmt insofern mit der Funktionsweise des Airy-Mikroskops 100 überein, da auch hier gleichzeitig eine teilkonfokale Abbildung und eine Abbildung im Weitfeld erzeugt werden.

## Patentansprüche

1. Verfahren zum Bestimmen einer Höhenlage eines Objekts (12) an einem lateralen ersten Ort des Objekts (12) mittels eines Mikroskops (10, 100, 200), welches das Objekt (12) mit einer Punktbildverwaschungsfunktion (PSF) entlang einer z-Richtung, die mit der Höhenrichtung übereinstimmt, abbildet, umfassend die Schritte

   - Abbilden des Objekts (12) mit dem Mikroskop (10, 100, 200) im Weitfeld und Bestimmen einer Weitfeldintensität (Iw),
   - Berechnen einer an dem ersten Ort erwarteten, maximalen Intensität ($I_{max}^*$) durch Multiplikation der Weit-feldintensität (Iw) mit einem vorgegebenen Skalierungsfaktor (Sk),
   - teilkonfokales Abbilden des Objekts (12) am ersten Ort mit dem Fokus an einer Messposition ($z_1$) in z-Richtung, wobei für die teilkonfokale Aufnahme eine Pinholeeinrichtung (18, 118, 218) mit einer Öffnung verwendet wird, die größer als eine Beugungsgrenze ist, und wobei die teilkonfokale Abbildung einen Tiefenschärfebereich festlegt und der Fokus in dem Tiefenschärfebereich liegt, und Bestimmen einer teilkonfokalen Intensität ($I_1$) der teilkonfokalen Abbildung an dem ersten Ort,
   - Berechnen einer der Punktbildverwaschungsfunktion (PSF) entsprechenden Intensität ($I_1^*$) an dem ersten Ort durch Bildung einer Differenz zwischen der teilkonfokalen Intensität ($I_1$) und einem Produkt aus der Weitfeldin-tensität (Iw) mit einem vorgegebenen Verknüpfungsfaktor (Vk),
   - Berechnen einer z-Koordinate ($z_h$) des Fokus, an der die Punktbildverwaschungsfunktion (PSF) maximal ist, unter Verwendung einer vorbekannten Form der Punktbildverwaschungsfunktion (PSF), der berechneten, der Punktbildverwaschungsfunktion (PSF) entsprechenden Intensität ($I_1^*$) und der berechneten, erwarteten maxi-malen Intensität ($I_{max}^*$), und
   - Verwenden der z-Koordinate ($z_h$) als Höhenlage des Objekts (12) an dem ersten Ort.

2. Verfahren nach Anspruch 1, **dadurch gekennzeichnet dass** der Skalierungsfaktor (Sk) durch folgende Schritte bestimmt wird:

   - Erzeugen eines z-Stapels durch wiederholtes teilkonfokales Abbilden eines lateralen ersten Kalibrationsorts eines ersten Kalibrationsobjekts oder des Objekts (12) mit unterschiedlichen, in z-Richtung verschobenen Foki und Bestimmen der teilkonfokalen Intensitäten für jede der teilkonfokalen Abbildungen,
- Berechnen eines Intensitätsverlaufs in z-Richtung an dem ersten Kalibrationsort und Bestimmen einer maximalen Kalibrationsintensität ($I_{kmax}$) des Intensitätsverlaufs an dem ersten Kalibrationsort,
- Abbilden des ersten Kalibrationsorts mit dem Mikroskop (10, 100, 200) im Weitfeld und Bestimmen einer ersten Kalibrationsweitfeldintensität ($I_{kW1}$) an dem ersten Kalibrationsort, und
- Berechnen des Skalierungsfaktors (Sk) als Verhältnis zwischen der maximalen Kalibrationsintensität ($I_{kmax}$) und der ersten Kalibrationsweitfeldintensität ($I_{kW1}$).

3. Verfahren nach einem der obigen Ansprüche, **dadurch gekennzeichnet dass** der Verknüpfungsfaktor (Vk) durch folgende Schritte bestimmt wird:

   - teilkonfokales Abbilden eines lateralen zweiten Kalibrationsorts eines zweiten Kalibrationsobjekts oder des Objekts (12) mit dem Fokus an einer Kalibrationsmessposition ($z_{k1}$) in z-Richtung, der in dem Tiefenschärfebereich liegt, und Bestimmen einer Kalibrationsintensität ($I_{k1}$) der teilkonfokalen Abbildung an dem zweiten Kalibrationsort,
   - konfokales Abbilden des zweiten Kalibrationsorts mit dem Fokus an der Kalibrationsmessposition ($z_{k1}$) und Bestimmen einer konfokalen Kalibrationsintensität ($I_{k1}*$) der konfokalen Abbildung an dem zweiten Kalibrationsort,
   - Abbilden des zweiten Kalibrationsorts mit dem Mikroskop (10, 100, 200) im Weitfeld und Bestimmen einer zweiten Kalibrationsweitfeldintensität ($I_{kW2}$) an dem zweiten Kalibrationsort, und
   - Berechnen des Verknüpfungsfaktor (Vk) als Verhältnis zwischen der Differenz zwischen der teilkonfokalen Kalibrationsintensität ($I_{k1}$) und der konfokalen Kalibrationsintensität ($I_{k1}*$) zu der zweiten zweiten Kalibrationsweitfeldintensität ($I_{kW2}$).

4. Verfahren nach einem der obigen Ansprüche, **dadurch gekennzeichnet, dass** der erste Ort mit dem Mikroskop (10, 100, 200) im Weitfeld abgebildet wird und dass eine aktuelle Weitfeldintensität (Iw) an dem ersten Ort bestimmt wird.

5. Verfahren nach einem der obigen Ansprüche, **gekennzeichnet durch** die Schritte:

   - teilkonfokales Abbilden des ersten Orts mit dem Fokus an wenigstens zwei in z-Richtung beabstandeten Messpositionen ($z_1$, $z_2$), die jeweils in dem Tiefenschärfebereich liegen, und Bestimmen von teilkonfokalen Intensitäten ($I_1$, $I_2$) für jede teilkonfokale Abbildung an dem ersten Ort,
   - Berechnen der der Punktbildverwaschungsfunktion (PSF) entsprechenden Intensitäten ($I_1*$, $I_2*$) an dem ersten Ort durch jeweilige Bildung einer Differenz zwischen der jeweiligen teilkonfokalen Intensität ($I_1$, $I_2$) und einem Produkt aus Weitfeldintensität (Iw) mit dem vorgegebenen Verknüpfungsfaktor (Vk),
   - Berechnen der z-Koordinate unter Verwendung der Form der Punktbildverwaschungsfunktion (PSF), der berechneten, der Punktbildverwaschungsfunktion (PSF) entsprechenden Intensitäten ($I_1*$, $I_2*$) und der berechneten, erwarteten maximalen Intensität ($I_{max}*$).

6. Verfahren nach einem der obigen Ansprüche, **dadurch gekennzeichnet, dass** zur Erzeugung einer Live-Bestimmung einer Höhenlage des Objekts (12) an einem von dem ersten Ort unterschiedlichen, lateralen zweiten Ort des Objekts (12) der zweite Ort teilkonfokal abgebildet wird und dass zum Berechnen einer z-Koordinate an dem zweiten Ort die z-Koordinate ($z_h$) des Fokus an dem ersten Ort berücksichtigt wird.

7. Verfahren nach einem der obigen Ansprüche, **gekennzeichnet durch** die Schritte:

   - teilkonfokales Abbilden des ersten Orts mit wenigstens zwei unterschiedlichen Pinholes und mit dem Fokus an einer Messposition ($z_1$) in z-Richtung, welcher in dem Tiefenschärfebereich liegt, und Bestimmen einer weiteren teilkonfokalen Intensität ($I_{1.pin}$) für die teilkonfokale Abbildung mit dem weiteren Pinhole,
   - Berechnen der z-Koordinate unter Verwendung der Form der Punktbildverwaschungsfunktion, der berechneten, der Punktbildverwaschungsfunktion (PSF) entsprechenden Intensität ($I_1*$), der weiteren teilkonfokalen Intensität ($I_{1,pin}$) und der berechneten, erwarteten maximalen Intensität ($I_{max}*$).

8. Verfahren nach einem der obigen Ansprüche, **dadurch gekennzeichnet, dass** als das Mikroskop (10, 100, 200) ein Laser-Scanning-Mikroskop (10) verwendet wird, wobei zum teilkonfokalen Abbilden und Abbilden im Weitfeld die Größe des Pinholes geändert wird.

9. Verfahren nach einem der Ansprüche 1 bis 8, **dadurch gekennzeichnet, dass** als das Mikroskop (10, 100, 200) ein Laser-Scanning-Mikroskop (10) verwendet wird, wobei zum teilkonfokalen Abbilden und Abbilden im Weitfeld zwei Detektoren hinter einem Pinhole unterschiedlicher Größe vorgesehen werden oder wobei zum Abbilden im Weitfeld eine Weitfeldkamera verwendet wird.

10. Verfahren nach einem der Ansprüche 1 bis 7, **dadurch gekennzeichnet, dass** als das Mikroskop (10, 100, 200) ein konfokales Topographie-Mikroskop (200) verwendet wird, bei ein Gitter als Pinhole verwendet wird, wobei zum teilkonfokalen Abbilden eine erste Kamera mit dem Gitter und zum Abbilden im Weitfeld eine zweite Kamera verwendet wird.

11. Verfahren nach einem der Ansprüche 1 bis 7, **dadurch gekennzeichnet, dass** als das Mikroskop (10, 100, 200) ein konfokales Airy-Mikroskop (100) verwendet wird, bei dem das Objekt (12) auf eine Detektoreinrichtung (116) abgebildet wird, die mehrere Pixel aufweist und die eine Beugungsstruktur der teilkonfokalen Abbildung auflöst, wobei die Weitfeldintensität (lw) und die teilkonfokalen Intensität ($I_1$) aus einer Aufnahme bestimmt werden oder wobei zum Abbilden im Weitfeld eine Weitfeldkamera verwendet wird.

12. Mikroskop zur Erzeugung einer teilkonfokalen Abbildung eines Objekts (12) und einer Abbildung des Objekts (12) im Weitfeld, umfassend

- eine Detektoreinrichtung (16, 116, 216),
- eine Pinholeeinrichtung (18, 118, 218) zur teilkonfokalen Abbildung sowie zur Aufnahme im Weitfeld,
- eine Fokussiereinrichtung (20), welche ausgebildet ist, eine z-Lage eines Fokus der teilkonfokalen Abbildung einzustellen, und
- eine Steuereinrichtung (24) zur Steuerung der Pinholeeinrichtung (18, 118, 218), welche mit der Detektoreinrichtung (16, 116, 216) verbunden ist,
- wobei das Mikroskop (10, 100, 200) das Objekt (12) entlang einer z-Richtung, welche mit der Höhenrichtung des Objekts (12) übereinstimmt, mit einer Punktbildverwaschungsfunktion (PSF) abbildet,
- wobei die Steuereinrichtung (24) ausgebildet ist, das Verfahren nach einem der Ansprüche 1 bis 8 durchzuführen.

13. Mikroskop nach Anspruch 12, **dadurch gekennzeichnet, dass** eine Größe eines Pinholes der Pinholeeinrichtung (18) verstellbar ist.

14. Mikroskop nach Anspruch 12, **dadurch gekennzeichnet, dass** die Detektoreinrichtung (216) einen ersten Detektor (216a) für die teilkonfokale Abbildung und einen zweiten Detektor (216b) für die Abbildung im Weitfeld umfasst.

**Claims**

1. Method for determining an elevation of an object (12) at a lateral first location of the object (12) using a microscope (10, 100, 200), which images the object (12) with a point spread function (PSF) in a z-direction that coincides with the elevation, comprising the following steps:

- imaging the object (12) with the microscope (10, 100, 200) in wide field and determining a wide field intensity ($I_W$),
- calculating a maximum intensity ($I_{max}^*$) expected at the first location by multiplying the wide field intensity ($I_W$) with a specified scaling factor (Sk),
- partially confocally imaging the object (12) at the first location with the focus at a measurement position (zi) in the z-direction, wherein for the partially confocal recording a pinhole device (18, 118, 218) having an opening which is greater than a diffraction limit is used, and wherein the partially confocal imaging establishes a depth of field range and the focus is situated in the depth of field range, and determining a partially confocal intensity ($I_1$) of the partially confocal image at the first location,
- calculating an intensity ($I_1^*$) corresponding to the point spread function (PSF) at the first location by way of subtraction between the partially confocal intensity ($I_1$) and the product of the wide field intensity ($I_W$) and a specified linking factor (Vk),
- calculating a z-coordinate ($z_h$) of the focus at which the point spread function (PSF) is maximum using a previously known form of the point spread function (PSF), the calculated intensity ($I_1^*$) corresponding to the point spread function (PSF) and the calculated expected maximum intensity ($I_{max}^*$), and
- using the z-coordinate ($z_h$) as the elevation of the object (12) at the first location.

2. Method according to Claim 1, **characterized in that** the scaling factor (Sk) is determined by the following steps:

- producing a z-stack by repeated partially confocally imaging a lateral first calibration location of a first calibration object or of the object (12) with different foci which are shifted in the z-direction, and determining the partially confocal intensities for each of the partially confocal images,
- calculating an intensity profile in the z-direction at the first calibration location, and determining a maximum calibration intensity ($I_{kmax}$) of the intensity profile at the first calibration location,
- imaging the first calibration location with the microscope (10, 100, 200) in wide field, and determining a first calibration wide field intensity ($I_{kW1}$) at the first calibration location, and
- calculating the scaling factor (Sk) as a ratio between the maximum calibration intensity ($I_{kmax}$) and the first calibration wide field intensity ($I_{kW1}$).

3. Method according to one of the preceding claims, **characterized in that** the linking factor (Vk) is determined by the following steps:

- partially confocal imaging a lateral second calibration location of a second calibration object or of the object (12) with the focus at a calibration measurement position ($z_{k1}$) in the z-direction which is situated in the depth of field range, and determining a calibration intensity ($I_{k1}$) of the partially confocal image at the second calibration location,
- confocally imaging the second calibration location with the focus at the calibration measurement position ($z_{k1}$), and determining a confocal calibration intensity ($I_{k1}^*$) of the confocal image at the second calibration location,
- imaging the second calibration location with the microscope (10, 100, 200) in wide field, and determining a second calibration wide field intensity ($I_{kW2}$) at the second calibration location, and
- calculating the linking factor (Vk) as a ratio between the difference between the partially confocal calibration intensity ($I_{k1}$) and the confocal calibration intensity ($I_{k1}^*$) to the second second calibration wide field intensity ($I_{kW2}$).

4. Method according to one of the preceding claims, **characterized in that** the first location is imaged with the microscope (10, 100, 200) in wide field and **in that** a current wide field intensity ($I_W$) is determined at the first location.

5. Method according to one of the preceding claims, **characterized by** the following steps:

- partially confocally imaging the first location with the focus at least at two measurement positions ($z_1$, $z_2$) which are spaced apart in the z-direction and are situated in each case in the depth of field range, and determining partially confocal intensities ($I_1$, $I_2$) for each partially confocal image at the first location,
- calculating the intensities ($I_1^*$, $I_2^*$) corresponding to the point spread function (PSF) at the first location by way of a respective subtraction between the respective partially confocal intensity ($I_1$, $I_2$) and a product of wide field intensity ($I_W$) and the specified linking factor (Vk),
- calculating the z-coordinate using the form of the point spread function (PSF), the calculated intensities ($I_1^*$, $I_2^*$) corresponding to the point spread function (PSF) and the calculated expected maximum intensity ($I_{max}^*$).

6. Method according to one of the preceding claims, **characterized in that**, for producing a live determination of an elevation of the object (12) at a laterally second location of the object (12), which differs from the first one, the second location is imaged in partially confocal fashion and **in that**, for calculating a z-coordinate at the second location, the z-coordinate ($z_h$) of the focus at the first location is taken into consideration.

7. Method according to one of the preceding claims, **characterized by** the following steps:

- partially confocally imaging the first location with at least two different pinholes and with the focus at a measurement position (zi) in the z-direction which is situated in the depth of field range, and determining a further partially confocal intensity ($I_{1,pin}$) for the partially confocal image with the further pinhole,
- calculating the z-coordinate using the form of the point spread function, the calculated intensity ($I_1^*$) corresponding to the point spread function (PSF), the further partially confocal intensity ($I_{1,pin}$) and the calculated expected maximum intensity ($I_{max}^*$).

8. Method according to one of the preceding claims, **characterized in that** a laser scanning microscope (10) is used as the microscope (10, 100, 200), wherein the size of the pinhole is changed for partially confocal imaging and imaging in wide field.

9. Method according to one of Claims 1 to 8, **characterized in that** a laser scanning microscope (10) is used as the microscope (10, 100, 200), wherein, for partially confocal imaging and imaging in wide field, two detectors are provided behind a pinhole of different size or wherein a wide field camera is used for imaging in wide field.

10. Method according to one of Claims 1 to 7, **characterized in that** a confocal topography microscope (200) is used as the microscope (10, 100, 200), in which a grating is used as a pinhole, wherein a first camera with the grating is used for partially confocal imaging and a second camera is used for imaging in wide field.

11. Method according to one of Claims 1 to 7, **characterized in that** a confocal Airy microscope (100) is used as the microscope (10, 100, 200), in which the object (12) is imaged onto a detector device (116) which comprises a plurality of pixels and resolves a diffraction structure of the partially confocal image, wherein the wide field intensity ($I_W$) and the partially confocal intensity ($I_1$) are determined from one recording or wherein a wide field camera is used for imaging in wide field.

12. Microscope for producing a partially confocal image of an object (12) and an image of the object (12) in wide field, comprising

- a detector device (16, 116, 216),
- a pinhole device (18, 118, 218) for partially confocal imaging and recording in wide field,
- a focusing device (20), which is embodied for setting a z-position of a focus of the partially confocal image, and
- a control device (24) for controlling the pinhole device (18, 118, 218), which is connected to the detector device (16, 116, 216),
- wherein the microscope (10, 100, 200) images the object (12) in a z-direction, which coincides with the height direction of the object (12), with a point spread function (PSF),
- wherein the control device (24) is embodied to carry out the method according to one of Claims 1 to 8.

13. Microscope according to Claim 12, **characterized in that** a size of a pinhole of the pinhole device (18) is adjustable.

14. Microscope according to Claim 12, **characterized in that** the detector device (216) comprises a first detector (216a) for partially confocal imaging and a second detector (216b) for imaging in wide field.

**Revendications**

1. Procédé de détermination d'une position en hauteur d'un objet (12) au niveau d'un premier endroit latéral de l'objet (12) au moyen d'un microscope (10, 100, 200) qui représente l'objet (12) avec une fonction d'entrelacement de pixels (PSF) le long d'une direction z qui coïncide avec le sens de la hauteur, comprenant les étapes suivantes

- représentation de l'objet (12) avec le microscope (10, 100, 200) dans le champ large et détermination d'une intensité de champ large (Iw),
- calcul d'une intensité maximale ($I_{max*}$) attendue au niveau du premier endroit par multiplication de l'intensité de champ large (Iw) par un facteur de mise à l'échelle (Sk) prédéfini,
- représentation partiellement confocale de l'objet (12) au niveau du premier endroit avec le foyer au niveau d'une position de mesure ($z_1$) dans la direction z, un dispositif à trou d'épingle (18, 118, 218) étant utilisé pour l'enregistrement partiellement confocal, pourvu d'une ouverture qui est plus grande qu'une limite de diffraction, et la représentation partiellement confocale définissant une plage de profondeur de champ et le foyer se trouvant dans la plage de profondeur de champ, et détermination d'une intensité partiellement confocale ($I_1$) de la représentation partiellement confocale au niveau du premier endroit,
- calcul d'une intensité ($I_{1*}$) correspondant à la fonction d'entrelacement de pixels (PSF) au niveau du premier endroit par calcul d'une différence entre l'intensité partiellement confocale ($I_1$) et un produit de l'intensité de champ large (Iw) par un facteur de combinaison (Vk) prédéfini,
- calcul d'une coordonnée z ($z_h$) du foyer, au niveau de laquelle la fonction d'entrelacement de pixels (PSF) est maximale, en utilisant une forme préalablement connue de la fonction d'entrelacement de pixels (PSF), l'intensité ($I_{1*}$) calculée correspondant à la fonction d'entrelacement de pixels (PSF) et l'intensité maximale ($I_{max*}$) attendue calculée, et
- utilisation de la coordonnée z ($z_h$) en tant que position en hauteur de l'objet (12) au niveau du premier endroit.

2. Procédé selon la revendication 1, **caractérisé en ce que** le facteur de mise à l'échelle (Sk) est déterminé par les étapes suivantes :

- génération d'un empilement z par représentation partiellement confocale répétée d'un premier endroit d'étalonnage latéral d'un premier objet d'étalonnage ou de l'objet (12) avec des foyers différents décalés dans la direction z et détermination des intensités partiellement confocales pour chacune des représentations partiellement confocales,
- calcul d'une courbe d'intensité dans la direction z au niveau du premier endroit d'étalonnage et détermination d'une intensité d'étalonnage maximale ($I_{kmax}$) de la courbe d'intensité au niveau du premier endroit d'étalonnage,
- représentation du premier endroit d'étalonnage avec le microscope (10, 100, 200) dans le champ large et détermination d'une première intensité de champ large d'étalonnage ($I_{kW1}$) au niveau du premier endroit d'étalonnage, et
- calcul du facteur de mise à l'échelle (Sk) en tant que rapport entre l'intensité d'étalonnage maximale ($I_{kmax}$) et la première intensité de champ large d'étalonnage ($I_{kW1}$).

3. Procédé selon l'une des revendications précédentes, **caractérisé en ce que** le facteur de combinaison (Vk) est déterminé par les étapes suivantes :

- représentation partiellement confocale d'un deuxième endroit d'étalonnage latéral d'un deuxième objet d'étalonnage ou de l'objet (12) avec le foyer au niveau d'une position de mesure d'étalonnage ($z_{k1}$) dans la direction z, laquelle se trouve dans la plage de profondeur de champ, et détermination d'une intensité d'étalonnage ($I_{k1}$) de la représentation partiellement confocale au niveau du deuxième endroit d'étalonnage,
- représentation confocale du deuxième endroit d'étalonnage avec le foyer au niveau de la position de mesure d'étalonnage ($z_{k1}$) et détermination d'une intensité d'étalonnage confocale ($I_{k1*}$) de la représentation confocale au niveau du deuxième endroit d'étalonnage,
- représentation du deuxième endroit d'étalonnage avec le microscope (10, 100, 200) dans le champ large et détermination d'une deuxième intensité de champ large d'étalonnage ($I_{kW2}$) au niveau du deuxième endroit d'étalonnage, et
- calcul du facteur de mise à l'échelle (Vk) en tant que rapport de la différence entre l'intensité d'étalonnage partiellement confocale ($I_{k1}$) et l'intensité d'étalonnage confocale ($I_{k1*}$) par la deuxième deuxième intensité de champ large d'étalonnage ($I_{kW2}$).

4. Procédé selon l'une des revendications précédentes, **caractérisé en ce que** le premier endroit est représenté avec le microscope (10, 100, 200) dans le champ large et **en ce qu'**une intensité de champ large ($I_w$) actuelle au niveau du premier endroit est déterminée.

5. Procédé selon l'une des revendications précédentes, **caractérisé par** les étapes suivantes :

- représentation partiellement confocale du premier endroit avec le foyer au niveau d'au moins deux positions de mesure ($z_1$, $z_2$) espacées dans la direction z, lesquelles se trouvent respectivement dans la plage de profondeur de champ, et détermination des intensités partiellement confocales ($I_1$, $I_2$) pour chaque représentation partiellement confocale au niveau du premier endroit,
- calcul des intensités ($I_{1*}$, $I_{2*}$) correspondant à la fonction d'entrelacement de pixels (PSF) au niveau du premier endroit par calcul respectif d'une différence entre l'intensité partiellement confocale ($I_1$, $I_2$) respective et un produit de l'intensité de champ large (Iw) par le facteur de combinaison (Vk) prédéfini,
- calcul de la coordonnée z en utilisant la forme de la fonction d'entrelacement de pixels (PSF), les intensités ($I_{1*}$, $I_{2*}$) calculées correspondant à la fonction d'entrelacement de pixels (PSF) et l'intensité maximale ($I_{max*}$) attendue calculée.

6. Procédé selon l'une des revendications précédentes, **caractérisé en ce que** pour générer une détermination en direct d'une position en hauteur de l'objet (12) au niveau d'un deuxième endroit latéral de l'objet (12), différent du premier endroit, le deuxième endroit est représenté de manière partiellement confocale et **en ce que** pour calculer une coordonnée z au niveau du deuxième endroit, la coordonnée z ($z_h$) du foyer au niveau du premier endroit est prise en compte.

7. Procédé selon l'une des revendications précédentes, **caractérisé par** les étapes suivantes :

- représentation partiellement confocale du premier endroit avec au moins deux trous d'épingle différents et avec le foyer au niveau d'une position de mesure (zi) dans la direction z, laquelle se trouve dans la plage de profondeur de champ, et détermination d'une intensité partiellement confocale supplémentaire ($I_{1,pin}$) pour la représentation partiellement confocale avec le trou d'épingle supplémentaire,

- calcul de la coordonnée z en utilisant la forme de la fonction d'entrelacement de pixels, l'intensité ($I_{1*}$) calculée correspondant à la fonction d'entrelacement de pixels (PSF), l'intensité partiellement confocale supplémentaire ($I_{1,pin}$) et l'intensité maximale ($I_{max*}$) attendue calculée.

8. Procédé selon l'une des revendications précédentes, **caractérisé en ce que** le microscope (10, 100, 200) utilisé est un microscope à balayage laser (10), la taille du trou d'épingle étant modifiée pour la représentation partiellement confocale et la représentation dans le champ large.

9. Procédé selon l'une des revendications 1 à 8, **caractérisé en ce que** le microscope (10, 100, 200) utilisé est un microscope à balayage laser (10), deux détecteurs étant prévus derrière un trou d'épingle de taille différente pour la représentation partiellement confocale et la représentation dans le champ large et une caméra à champ large étant utilisée pour la représentation dans le champ large.

10. Procédé selon l'une des revendications 1 à 7, **caractérisé en ce que** le microscope (10, 100, 200) utilisé est un microscope de topographie confocal (200), avec lequel un réseau de diffraction est utilisé en tant que trou d'épingle, une première caméra pourvue du réseau de diffraction étant utilisée pour la représentation partiellement confocale et une deuxième caméra pour la représentation dans le champ large.

11. Procédé selon l'une des revendications 1 à 7, **caractérisé en ce que** le microscope (10, 100, 200) utilisé est un microscope d'Airy confocal (100) avec lequel l'objet (12) est représenté sur un dispositif détecteur (116) qui possède plusieurs pixels et qui résout une structure de diffraction de la représentation partiellement confocale, l'intensité de champ large (Iw) et l'intensité partiellement confocale ($I_1$) étant déterminées à partir d'un enregistrement ou une caméra à champ large étant utilisée pour la représentation dans le champ large.

12. Microscope destiné à produire une représentation partiellement confocale d'un objet (12) et une représentation de l'objet (12) dans le champ large, comprenant :

    - un dispositif détecteur (16, 116, 216),
    - un dispositif à trou d'épingle (18, 118, 218) destiné à la représentation partiellement confocale ainsi qu'à l'enregistrement dans le champ large,
    - un dispositif de mise au point (20) qui est configuré pour régler une position z d'un foyer de la représentation partiellement confocale, et
    - un dispositif de commande (24) destiné à commander le dispositif à trou d'épingle (18, 118, 218), lequel est relié au dispositif détecteur (16, 116, 216),
    - le microscope (10, 100, 200) représentant l'objet (12) le long d'une direction z, qui coïncide avec le sens de la hauteur de l'objet (12), avec une fonction d'entrelacement de pixels (PSF),
    - le dispositif de commande (24) étant configuré pour mettre en oeuvre le procédé selon l'une des revendications 1 à 8.

13. Microscope selon la revendication 12, **caractérisé en ce qu'**une taille d'un trou d'épingle dans le dispositif à trou d'épingle (18) est réglable.

14. Microscope selon la revendication 12, **caractérisé en ce que** le dispositif détecteur (216) comporte un premier détecteur (216a) pour la représentation partiellement confocale et un deuxième détecteur (216b) pour la représentation dans le champ large.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040008515 A1

**In der Beschreibung aufgeführte Nicht-Patentliteratur**

- **HIRAOKA Y. et al.** *Biophys. J.,* Februar 1990, vol. 57, 325-333

- **MCNALLY J. et al.** *SPIE,* 1997, vol. 2984, 52-63